# EUROPEAN PATENT APPLICATION

(11) **EP 4 378 737 A1**
(43) Date of publication of application: **05.06.2024**
(21) Application number: 22210318.6
(22) Date of filing: 29.11.2022
(51) Int. Cl.: B60K 35/00, B60R 1/00, G01C 21/36

(54) **COMPUTER-IMPLEMENTED METHOD AND SYSTEM FOR ARRANGING A CONTENT IN A DISPLAY FOR A DRIVER OF A VEHICLE, DATA PROCESSING APPARATUS, VEHICLE, COMPUTER PROGRAM AND COMPUTER-READABLE STORAGE MEDIUM**

(71) Applicant: Volvo Car Corporation, 405 31 Göteborg (SE)
(72) Inventor: WICKMAN, Casper, 40531 Göteborg (SE); AUSINSCH, Fredrik, 40531 Göteborg (SE)
(74) Representative: Maiwald GmbH

(57) **Abstract**

The disclosure relates to a computer-implemented method for arranging a content (52) in a display (11) for a driver of a vehicle. According to the method, driver's eye position data indicating a position of at least one eye of the driver are received and steering wheel position data indicating a position of a steering wheel (12) are received. Subsequently, a non-visible region of the display (11) being obscured by the steering wheel (12) based on the steering wheel position data and the driver's eye position data is determined and an arrangement of the content (52) outside the non-visible region is triggered. Moreover, a data processing apparatus comprising means for carrying out this method is presented. Furthermore, a system for arranging a content in a display (11) for a driver of a vehicle is shown which comprises such a data processing apparatus. Additionally, a vehicle comprising such a system is described. Also, a computer program and a computer-readable storage medium are shown.

## Description

The present disclosure relates to a computer-implemented method for arranging a content in a display for a driver of a vehicle.

The present disclosure is further directed to a data processing apparatus comprising means for carrying out the above method, a system for arranging a content in a display for a driver of a vehicle, and a vehicle comprising such a system.

Additionally, the present disclosure relates to a computer program and a computer-readable storage medium.

Digital displays have become standard features in cars. In this context, the size and placement of the displays has become more adapted to the interior design of the vehicle. Displays may be placed at the traditional position in the vehicle, i.e. behind the steering wheel. Due to the anthropometric spread among humans, a plurality of drivers may have problems finding a good seating position and, at the same time, being able to see all the content in a display, because the steering wheel may obscure the visibility of certain portions of the display. Since the display may contain driver information such as speed, telltales, small maps etc., a driver will always make an effort to be able to see this information. As a consequence thereof, the comfort for the driver may be reduced.

There may, therefore, be a need to improve a visibility of content in a display for a driver of a vehicle.

The problem is at least partially solved or alleviated by the subject matter of the independent claims of the present disclosure, wherein further examples are incorporated in the dependent claims.

According to a first aspect, there is provided a computer-implemented method for arranging a content in a display for a driver of a vehicle. The method comprises:
SE:TOP
- receiving driver's eye position data indicating a position of at least one eye of the driver;
- receiving steering wheel position data indicating a position of a steering wheel;
- determining a non-visible region of the display being obscured by the steering wheel based on the steering wheel position data and the driver's eye position data,
- triggering an arrangement of the content outside the non-visible region.

In this context, the term content as used herein is to be understood broadly and represents any information and/or graphic data including driver information. For instance driver information may comprise a speed indicator, warning lights, telltales, warning information, information from driving assistance systems, and maps, but is not limited thereto. Other driver information may comprise an indication of an incoming phone call, an indications of a chosen radio station, but is not limited thereto. Following the present method, driver information may be arranged outside of the non-visible region of the display, i.e. outside a region of the display which is obscured respectively covered by the steering wheel with respect to the driver's eye position. The term display as used herein is to be understood broadly and represents any display mean providing content to a driver. The display may be a display device, a Driver Information Module (DIM) or a physical screen unit being arranged on or in the dashboard of the vehicle. Seen from a driver's position, the display is arranged behind the steering wheel. The term steering wheel position data as used herein is to be understood broadly and represents any data indication a position of the steering wheel in the interior of the driver cabin. The steering wheel position data may be two dimensional or three dimensional data. Alternatively or additionally, the steering wheel position data may further include data indicating the form respectively the design of the steering wheel and/or the form respectively the design of the display. The term driver's eye position data as used herein is to be understood broadly and represents any data indicating a position of the driver's eye in the interior of the vehicle. The driver's eye position data may be two dimensional or three dimensional data. By the determination of non-visible regions of the display and triggering an arrangement of the content outside of the non-visible region, the visibility of content in a display for a driver of a vehicle can be increased. Thereby, driving comfort is enhanced. Further, because both the driver's eye position and the position of the steering wheel is considered in the determination of the non-visible regions of a display, a specific configuration of the display with respect to the steering wheel position can be provided. If one of the driver's eye position and the position of the steering wheel changes, an amended non-visible region may be determined and the content may be rearranged accordingly.

According to an example of the method, the driver's eye position data and/or the steering wheel position data relate to three dimensions. By using three dimensional driver's eye position data and/or the steering wheel position data, the position of the driver's eye and/or the steering wheel can be specified precisely in the interior of the driver cabin, such that a more precise determination of the non-visible region of the display and an arrangement of the content outside of the non-visible region can be provided. Therefore, an improved visibility of content in a display for a driver of a vehicle is provided.

According to an example of the method, the received driver's eye position data are interior camera data, interior radar data and/or driver monitoring system data. By using interior camera data, interior radar data and/or driver monitoring system data as driver's eye position data, the precision and accuracy of the driver's eye position data can be increased such that a more precise determination of the non-visible region of the display and an arrangement of the content outside of the non-visible region can be provided. Therefore, an improved visibility of content in a display for a driver of a vehicle is provided and severe, critical and/or dangerous situation can be prevented.

In an example, the non-visible region is provided using linear optics.

According to an example of the method, the received steering wheel position data are steering wheel sensor data, interior camera data and/or interior radar data. By using steering wheel sensor data, interior camera data and/or interior radar data as steering wheel position data, the precision and accuracy of the steering wheel position data can be increased such that a more precise determination of the non-visible region of the display and an arrangement of the content outside of the non-visible region can be provided. Therefore, an improved visibility of content in a display for a driver of a vehicle is provided and severe, critical and/or dangerous situation can be prevented.

According to an example of the method, the content in the display comprises at least one of the following: a speed indicator, a vehicle condition indicator, a warning information, a map. In this context, the term vehicle condition indicator is to be understood broadly and represents any warning light symbol and indicator in the dashboard, in particular a dashboard symbol. By using a speed indicator, a vehicle condition indicator, a warning information and/or a map as the content, it is ensured that relevant information are always visible for a driver of a vehicle. This enhances driving comfort and road safety.

According to an example of the method, the method is executed according to a predefined execution time schedule. In this context, the term execution time schedule is to be understood broadly and represents that the method is executed at pre-defined, pre-determined, pre-set or pre-provided time steps, like every 5 or 10 seconds. Alternatively and/additionally, the time schedule may be event based. For instance, an event based time schedule may be an execution of the method, when the vehicle is started and/or the engine of the vehicle is started. By executing the method according to a time schedule, a temporary, in particular short-term, change in the driver's eye position does not lead to an execution of the method, such that the execution frequency can be reduced and the energy consumption of the method can be significantly reduced.

According to an example of the method, the method is executed following a detected change in the received driver's eye position data and/or a detected change in the received steering wheel position data. In this context, the term change is to be understood broadly and represents any variation in the driver's eye position data and/or the steering wheel position data. The variation may be detected when the position of the driver's eye and/or the position of the steering wheel exceeds a pre-defined, pre-set, pre-determined threshold. The threshold may be a two dimensional threshold or a three dimensional threshold. For instance, the method is executed when the change in the driver's eye position and/or the steering wheel position exceeds the thresholds of 10 cm with respect to a former driver's eye position and/or the steering wheel position. Alternatively, the method is executed continuously when a change in the driver's eye position and/or the steering wheel position is detected. The former driver's eye position and/or the steering wheel position may be stored in a storage unit like a memory or a cash. By executing the method following a detected change in the received driver's eye position data and/or a detected change in the received steering wheel position data, a continuous arrangement of the content outside the non-visible region in the display can be provided. Therefore, an improved visibility of content in a display for a driver of a vehicle is provided.

According to an example of the method, the method further comprises, following a detected change in the received driver's eye position data and/or the received steering wheel position data, initiating a timer, and determining a non-visible region of the display after a predefined waiting time. By executing the determination of the non-visible region of the display after a predefined waiting time, temporary, in particular short-term, changes in the driver's eye position and/or the received steering wheel position do not lead to a determination of the non-visible regions of the display. Consequently, an execution frequency of the present method can be reduced and the energy consumption of the method can be significantly reduced.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method according to the present disclosure. When using such a data processing apparatus, a determination of non-visible region of the display and triggering of an arrangement of the content outside of the non-visible regions can be provided, such that the visibility of content in a display for a driver of a vehicle can be enhanced.

According to a third aspect, there is provided a system for arranging a content in a display for a driver of a vehicle. The system comprises at least one eye positioning unit for providing driver's eye position data indicating a position of at least one eye of the driver. Moreover, the system comprises at least one steering wheel positioning Unit for providing steering wheel position data indicating a position of the steering wheel and the data processing apparatus according to the present disclosure. The eye positioning unit and the steering wheel positioning unit are communicatively connected to the data processing apparatus. Thus when using such a system, a determination of a non-visible region of the display and a triggering of an arrangement of the content outside of the non-visible regions can be provided, such that the visibility of content in a display for a driver of a vehicle can be enhanced.

According to an example of the system, the at least one eye positioning unit comprises at least one interior camera unit, at least one interior radar unit and/or at least one driver monitoring system for providing driver's eye position data. The at least one eye positioning unit can be arranged in the interior of the vehicle facing the driver. The at least one eye positioning unit can be arranged on the steering wheel, on or in the dashboard and/or on or in the rearview mirror. Of course, also other suitable locations are possible. By using an interior camera unit, an interior radar unit and/or a driver monitoring system for providing the driver's eye position data, the precision and accuracy of the driver's eye position data can be increased, such that a more precise determination of the non-visible region of the display and an arrangement of the content outside of the non-visible region can be provided. Therefore, an improved visibility of content in a display for a driver of a vehicle is provided.

According to an example of the system, the at least one steering wheel positioning Unit comprises at least one steering wheel position sensor, at least one interior radar unit and/or at least one interior camera unit for providing steering wheel position data. By using a steering wheel position sensor, an interior camera unit and/or interior radar unit for providing the steering wheel position data, the precision and accuracy of the steering wheel position data can be increased such that a more precise determination of the non-visible region of the display and an arrangement of the content outside of the non-visible region can be provided. Therefore, an improved visibility of content in a display for a driver of a vehicle is provided.

According to a fourth aspect, there is provided a vehicle comprising a steering wheel system, a display, and a system according to the present disclosure. The steering wheel positioning unit is coupled to the steering wheel system and the display is coupled to the data processing apparatus of the system according to the present disclosure. By including the system for arranging a content in a display for a driver in a vehicle, a determination of non-visible region of the display and triggering of an arrangement of the content outside of the non-visible regions can be provided, such that the visibility of content in a display for a driver of a vehicle can be enhanced.

According to a fifth aspect, there is provided a computer program comprising instructions which, when the program is executed by a computer, cause the computer to carry out the method according to the present disclosure. By the computer program, a determination of non-visible region of the display and triggering of an arrangement of the content outside of the non-visible regions can be provided, such that the visibility of content in a display for a driver of a vehicle can be enhanced.

According to a sixth aspect, there is provided a computer-readable storage medium comprising instructions which, when executed by a computer, cause the computer to carry out the method according to the present disclosure. Also by the computer-readable storage medium, a determination of non-visible region of the display and triggering of an arrangement of the content outside of the non-visible regions can be provided, such that the visibility of content in a display for a driver of a vehicle can be enhanced.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows a vehicle according to the present disclosure being equipped with a system for arranging a content in a display for a driver of a vehicle according to the present disclosure having a data processing apparatus according to the present disclosure, a computer-readable storage medium according to the present disclosure and a computer program according to the present disclosure, such that a method according to the present disclosure may be executed using the data processing apparatus,
- Fig. 2a: shows a first exemplary arrangement of a display of the vehicle of Figure 1;
- Fig.2b: shows a second exemplary arrangement of a display of the vehicle of Figure 1;
- Fig. 3: shows the data processing apparatus of Figure 1 in a more detailed representation,
- Fig. 4: illustrates steps of the method for arranging a content in a display for a driver of a vehicle according to the present disclosure,
- Fig. 5a: illustrates a display and a steering wheel of the vehicle in Figure 1, wherein the display and the steering wheel are in a first configuration,
- Fig. 5b: illustrates a display and a steering wheel of the vehicle in Figure 1, wherein the display and the steering wheel are in a second configuration,
- Fig. 5c: illustrates a display and a steering wheel of the vehicle in Figure 1, wherein the display and the steering wheel are in a third configuration.

The Figures are merely schematic representations and serve only to illustrate examples of the disclosure. Identical or equivalent elements are in principle provided with the same reference signs.

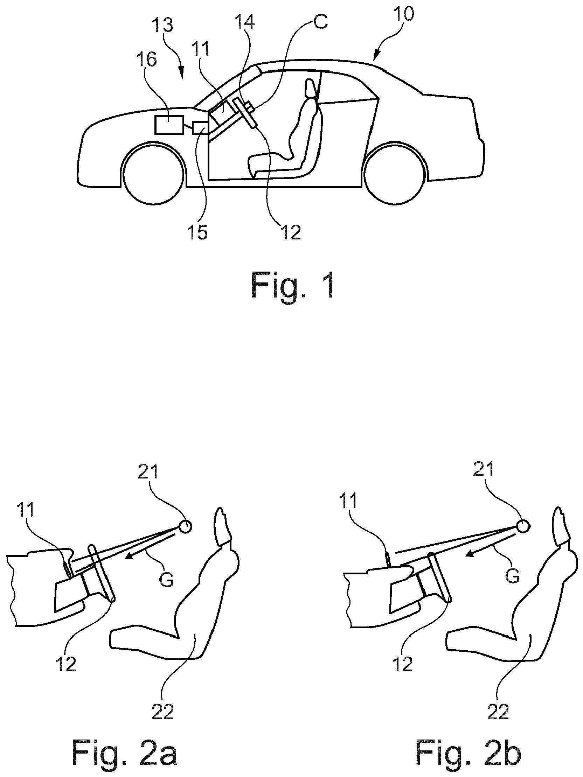

Figure 1 shows a vehicle 10 having a display 11 for displaying information for the driver of the vehicle 10 and a steering wheel system 12. The steering wheel system 12 comprises a steering wheel for steering the vehicle 10.

The vehicle10 is additionally equipped with a system 13 for arranging a content in the display 11 for the driver of the vehicle 10.

The content may be a driver information.

The system 11 comprises least one eye positioning unit, EPU, 14.

The EPU 14 comprises an interior camera unit being arranged at the steering wheel 12 in the interior of the vehicle 10.

The display 11 is mounted in the dashboard behind the steering wheel 12.

Further, the system 11 comprises a steering wheel positioning Unit, SPU, 15.

The SPU 15 is arranged on or at the steering column of the steering wheel 12.

Furthermore, the system 11 in comprises a data processing apparatus 16.

The EPU 14 and the SPU 15 are communicatively connected to the data processing apparatus 16. The coupling between the EPU 14, the SPU 15 and the data processing apparatus 16 can be provided by wire or wireless.

Also the display is communicatively connected to the data processing apparatus 16.

Figure 2a shows a first exemplary arrangement of the display 11 within the vehicle 10. In this example, the display 11 is integrated in the dashboard and arranged behind the steering wheel 12. When the driver takes a seat on a driver seat 22 and views from his or her specific eye position 21 to the display 11, a portion of the display 11 is covered or obscured by the steering wheel 12. The viewing direction is indicated by an arrow G.

Figure 2b shows a second exemplary arrangement of the display 11 within the vehicle 10. In the second example, the display 11 is arranged on top of the dashboard. When the driver takes a seat on the driver seat 22 and views from his or her specific eye position 21 to the display 11, a portion of the display 11 is covered or obscured by the steering wheel 12 even though the display 11 is not integrated in the dashboard.

It is noted that for the clarity of representation, only the driver's eye position 21 is represented in Figures 2a and 2b. The remaining parts of the driver's body, especially the head are not shown.

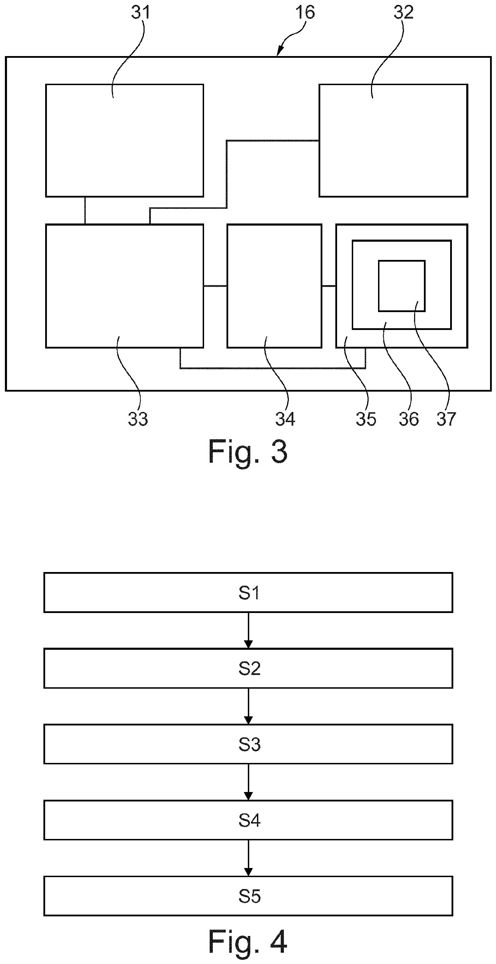

Figure 3 shows the data processing apparatus 16 in a more detailed manner.

The data processing apparatus 16 comprises a first receiving unit 31 for receiving driver's eye position data indicating a position 21 of at least one eye of the driver.

Further, the data processing apparatus 16 comprises a second receiving unit 32 for receiving steering wheel position data indicating a position of the steering wheel 12.

Furthermore, the data processing apparatus 16 comprises determination unit 33 for determining a non-visible region of the display 11 being obscured by the steering wheel 12.

The determination unit 33 receives the steering wheel position data from the second receiving unit 32 and driver's eye position data from the first receiving unit 31 and uses these data for calculating a non-visible portion of the display 11 being obscured by the steering wheel 12 with respect to the eye position of the driver 21.

Furthermore, the data processing apparatus 16 comprises a display layout unit 34 which receives the determined data indicating the non-visible region of the display 11 and provides and triggers an arrangement of the content outside of the nonvisible region of the display 11.

Further, the data processing apparatus 16 comprises a data storage unit 35. The data storage unit 35 comprises a computer-readable storage medium 36 and on the computer-readable storage medium 36 a computer program 37 is provided. The computer program 37 comprises instructions which, when executed by the data processing apparatus 16 or more generally a computer, cause the computer to carry out a method for arranging a content in a display for a driver of a vehicle.

In the following, the method for arranging a content in a display for a driver of a vehicle will be explained with reference to Figure 4.

In a first step S1, driver's eye position data indicating a position 21 of at least one eye of the driver are received. The driver's eye position data are generated by the eye position unit 14 being arranged on the steering wheel 12.

Thereafter, in a second step S2, steering wheel position data indicating a position of the steering wheel 12 are provided. The steering wheel position data are received from the steering wheel position unit 15 being arranged on the steering column.

In a third step S3, a non-visible region of the display 11 being obscured by the steering wheel is determined. The determination is based on the steering wheel position data and the driver's eye position data.

In a fourth step S4, an arrangement of the content outside the non-visible region of the display 11 is triggered. The triggering is provided by a display layout unit 34, DLU.

In an optional fifth step S5, following a detected change in the at least one of the driver's eye position data, a timer is initiated, and the method is executed after a predefined lapse of waiting time.

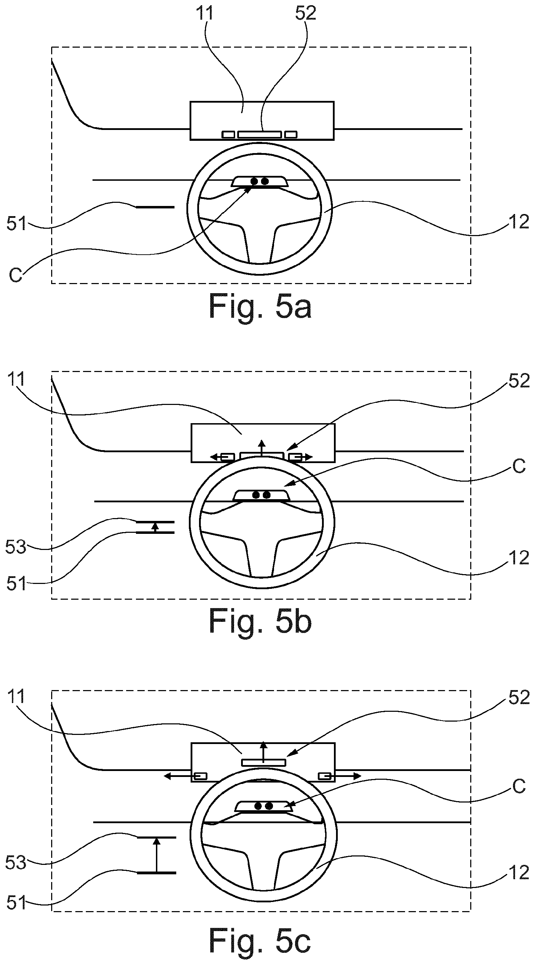

Figure 5 illustrates a first configuration of the display 11 and the steering wheel 12. In this configuration, the steering wheel 12 does not obscure the display 11. A position of the steering wheel 12 is indicated by bar 51. An arrangement of the content 52 of the display 11 is not necessary in this configuration.

Figure 5b illustrates a second configuration of the display 11 and the steering wheel 12. A position of the steering wheel 12 is indicated by bar 53. Thus, as compared to the configuration of Figure 5a, the steering wheel 12 has been moved slightly upwards. The steering wheel 12 obscures a lower central portion of the display 11. Using the above-mentioned method, the obscured portion of the display 11 is determined and the content 52 is shifted out of the determined non-visible regions of the display 11. The shifting of the content 52 is illustrated by arrows.

Figure 5c illustrates a third configuration of the display 11 and the steering wheel 12. The position of the steering wheel 12 is again indicated by bar 53. However, now the steering wheel 12 has been moved further upwards as compared to the configuration of Figure 5b. This has the effect that a bigger portion of the display 11 is obscured by the steering wheel 12. As before, the obscured region is detected using the above-mentioned method. Following the change in the steering wheel position data, the content 52 is shifted out of the determined non-visible regions of the display 11. The shifting of the content 52 is illustrated by arrows.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 11: display
- 12: steering wheel system
- 13: system
- 14: eye positioning unit, EPU
- 15: steering wheel positioning Unit, SPU
- 16: data processing apparatus
- 21: position of eyes
- 22: driver seat
- 31: first receiving unit
- 32: second receiving unit
- 33: determination unit
- 34: display layout unit
- 35: data storage unit
- 36: computer-readable storage medium
- 37: computer program
- 51: initial position
- 52: content
- 53: shifted position

- C: interior camera unit
- G: viewing direction
- S1: first step
- S2: second step
- S3: third step
- S4: fourth step
- S5: fifth step

## Claims

1. A computer-implemented method for arranging a content (52) in a display (11) for a driver of a vehicle (10), comprising:
- receiving driver's eye position data indicating a position (21) of at least one eye of the driver (S1);
- receiving steering wheel position data indicating a position of a steering wheel (12) (S2);
- determining a non-visible region of the display (11) being obscured by the steering wheel (12) based on the steering wheel position data and the driver's eye position data (S3);
- triggering an arrangement of the content (52) outside the non-visible region (S4).

2. The method according to any one of the preceding claims,
whereby the driver's eye position data and/or the steering wheel position data relate to three dimensions.

3. The method according to any one of the preceding claims,
whereby the received driver's eye position data are interior camera data, interior radar data and/or driver monitoring system data.

4. The method according to any one of the preceding claims,
whereby the received steering wheel position data are steering wheel sensor data, interior camera data and/or interior radar data.

5. The method according to any one of the preceding claims,
whereby the content (52) in the display (11) comprises at least one of the following: a speed indicator, a vehicle condition indicator, a warning information, a map.

6. The method according to any one of the preceding claims,
whereby the method is executed according to a predefined execution time schedule.

7. The method according to any one of the preceding claims,
whereby the method is executed following a detected change in the received driver's eye position data and/or a detected change in the received steering wheel position data.

8. The method according to claim 7, further comprising
following a detected change in the received driver's eye position data and/or the received steering wheel position data,
- initiating a timer, and
- determining a non-visible region of the display after a predefined waiting time (S5).

9. A data processing apparatus (16) comprising means for carrying out the method of any one of the preceding claims.

10. A system (13) for arranging a content (52) in a display (11) for a driver of a vehicle (10), comprising:
- at least one eye positioning unit (14), EPU, for providing driver's eye position data indicating a position (21) of at least one eye of the driver;
- at least one steering wheel positioning unit (15), SPU, for providing steering wheel position data indicating a position of the steering wheel (12); and
- the data processing apparatus (16) according to claim 9,
wherein the eye positioning unit (14) and the steering wheel positioning unit (15) are communicatively connected to the data processing apparatus (16).

11. The system (13) according to claim 10,
whereby the at least one eye positioning unit (14), EPU, comprises at least one interior camera unit (C), at least one interior radar unit and/or at least one driver monitoring system for providing driver's eye position data.

12. The system (13) according to claim 10 or 11,
whereby the at least one steering wheel positioning Unit (15), SPU, comprises at least one steering wheel position sensor, at least one interior radar unit and/or at least one interior camera unit for providing steering wheel position data.

13. A vehicle (10) comprising:
a steering wheel system (12);
a display (11); and
the system (13) according to any one of claims 10 to 12, wherein the steering wheel positioning unit (15) is coupled to the steering wheel system (12) and the display (11) is coupled to the data processing apparatus (16) of the system (13) according to any one of claims 10 to 12.

14. A computer program (37) comprising instructions which, when the computer program (37) is executed by a computer, cause the computer to carry out the method of any one of claims 1 to 8.

15. A computer-readable storage medium (36) comprising instructions which, when executed by a computer, cause the computer to carry out the method of any one of claims 1 to 8.

## Amended claims

### Amended claims in accordance with Rule 137(2) EPC.

1. A computer-implemented method for arranging a content (52) in a display (11) for a driver of a vehicle (10), comprising:
- receiving driver's eye position data indicating a position (21) of at least one eye of the driver (S1);
- receiving steering wheel position data indicating a position of a steering wheel (12) (S2);
- determining a non-visible region of the display (11) being obscured by the steering wheel (12) based on the steering wheel position data and the driver's eye position data (S3);
- triggering an arrangement of the content (52) outside the non-visible region (S4), **characterized in that**
the method is executed according to a predefined execution time schedule.

2. The method according to any one of the preceding claims,
whereby the driver's eye position data and/or the steering wheel position data relate to three dimensions.

3. The method according to any one of the preceding claims,
whereby the received driver's eye position data are interior camera data, interior radar data and/or driver monitoring system data.

4. The method according to any one of the preceding claims,
whereby the received steering wheel position data are steering wheel sensor data, interior camera data and/or interior radar data.

5. The method according to any one of the preceding claims,
whereby the content (52) in the display (11) comprises at least one of the following: a speed indicator, a vehicle condition indicator, a warning information, a map.

6. The method according to any one of the preceding claims,
whereby the method is executed following a detected change in the received driver's eye position data and/or a detected change in the received steering wheel position data.

7. The method according to claim 6, further comprising
following a detected change in the received driver's eye position data and/or the received steering wheel position data,
- initiating a timer, and
- determining a non-visible region of the display after a predefined waiting time (S5).

8. A data processing apparatus (16) comprising means for carrying out the method of any one of the preceding claims.

9. A system (13) for arranging a content (52) in a display (11) for a driver of a vehicle (10), comprising:
- at least one eye positioning unit (14), EPU, for providing driver's eye position data indicating a position (21) of at least one eye of the driver;
- at least one steering wheel positioning unit (15), SPU, for providing steering wheel position data indicating a position of the steering wheel (12); and
- the data processing apparatus (16) according to claim 8,
wherein the eye positioning unit (14) and the steering wheel positioning unit (15) are communicatively connected to the data processing apparatus (16).

10. The system (13) according to claim 9,
whereby the at least one eye positioning unit (14), EPU, comprises at least one interior camera unit (C), at least one interior radar unit and/or at least one driver monitoring system for providing driver's eye position data.

11. The system (13) according to claim 9 or 10,
whereby the at least one steering wheel positioning Unit (15), SPU, comprises at least one steering wheel position sensor, at least one interior radar unit and/or at least one interior camera unit for providing steering wheel position data.

12. A vehicle (10) comprising:
a steering wheel system (12);
a display (11); and
the system (13) according to any one of claims 9 to 11, wherein the steering wheel positioning unit (15) is coupled to the steering wheel system (12) and the display (11) is coupled to the data processing apparatus (16) of the system (13) according to any one of claims 10 to 12.

13. A computer program (37) comprising instructions which, when the computer program (37) is executed by a computer, cause the computer to carry out the method of any one of claims 1 to 7.

14. A computer-readable storage medium (36) comprising instructions which, when executed by a computer, cause the computer to carry out the method of any one of claims 1 to 7.
